(19)

Europäisches Patentamt
European Patent Office
Office européen des brevets

(11) **EP 2 852 238 A1**

(12) **EUROPEAN PATENT APPLICATION**

(43) Date of publication:
**25.03.2015 Bulletin 2015/13**

(51) Int Cl.:
*H04W 72/08* (2009.01)    *H04W 72/04* (2009.01)

(21) Application number: **13185135.4**

(22) Date of filing: **19.09.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **NTT DoCoMo, Inc.**
**Chiyoda-ku**
**Tokyo 100-6150 (JP)**

(72) Inventors:
• **Dotzler, Andreas**
  **80687 München (DE)**

• **Utschick, Wolfgang**
  **80687 München (DE)**
• **Taoka, Hidekazu**
  **81669 München (DE)**
• **Kusume, Katsutoshi**
  **80687 München (DE)**

(74) Representative: **Zimmermann, Tankred Klaus**
  **Schoppe, Zimmermann, Stöckeler**
  **Zinkler, Schenk & Partner mbB**
  **Patentanwälte**
  **Postfach 15 15 29**
  **80049 München (DE)**

(54) **Signaling and interference estimation for dynamic fractional reuse**

(57)    A method for determining at a user equipment (200) of a wireless communication system an interference estimate for at least one of a plurality of reuse patterns of a fractional reuse scheme used by the wireless communication system, comprises (a) receiving, at the user equipment (200), information about a reuse pattern currently used by the wireless communication system for a communication with the user equipment (200), and information about at least one further reuse pattern of the fractional reuse scheme; (b) determining, by the user equipment (200), a current interference estimate for the currently used reuse pattern; and (c) determining, by the user equipment (200), an interference estimate for the at least one further reuse pattern based on the determined current interference estimate.

FIG 4

## Description

The present invention relates to the field of wireless communications, transmission technology, coordinated multi-point (CoMP) transmission, dynamic fractional reuse, signaling, LTE-A. Embodiments of the invention relate to a method for determining at a user equipment of a wireless communication system an interference estimate for at least one of a plurality of reuse patterns of a fractional reuse scheme used by the wireless communication system. Further embodiments concern a wireless communication system and a user equipment for such a wireless communication system.

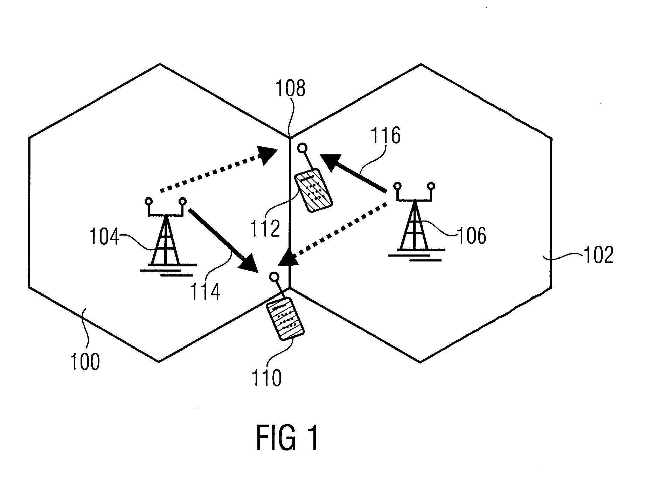

In a wireless cellular network, e.g. in the downlink thereof, performance is diminished by inter-cell interference (ICI). Users at the cell edge may be affected and may be excluded from network service. When considering an efficient operation of a wireless cellular network comprising base stations or transmitters that may serve multiple users on the same resource block, for example on the same frequency, interference among users served by the same transmitter can be coordinated optimally. For example, the spatial degrees of freedom offered by multiple antenna techniques may be used to establish orthogonality so that inter-cell interference may be the main diminishing effect on the performance of the network. This is depicted schematically in Fig. 1 showing a small portion of a cellular network, more specifically two cells 100 and 102 thereof. Each cell comprises a base station 104, 106. At a cell-edge 108 two user equipments (UEs) 110, 112, for example cellular telephones, are present. The user equipment 110 is served by base station 104, as is indicated by the solid arrow 114. The user equipment 112 is served by the base station 106 of the cell 102, as it is indicated by the solid arrow 116. Due to their presence at the cell-edge 108, the user equipments 110 and 112 also experiences a high inter-cell interference from the base stations of the neighboring cells, as is schematically depicted by the dotted arrows.

One known solution to eliminate ICI is the joint encoding of information over multiple base stations (eNBs). This, however, requires an huge amount of additional complexity and signaling. Alternatively, methods for active management of interference by cooperation of the eNBs may be used, while every user equipment UE is served by a single eNB - so-called Inter-Cell Interference Coordination (ICIC). The additional degrees of freedom offered by multiple antenna systems allow for ICIC, but a centralized coordination may be required.

For networks that provide a huge variety of services a frequency reuse of one may be desired. However, in a network with universal reuse, the cell-edge users may be excluded from service due to high inter-cell interference. Hybrid schemes that are a combination of universal reuse and higher reuse factors, so called fractional reuse, were first introduced in [1] and are suggested for standards like LTE and WiMAX.

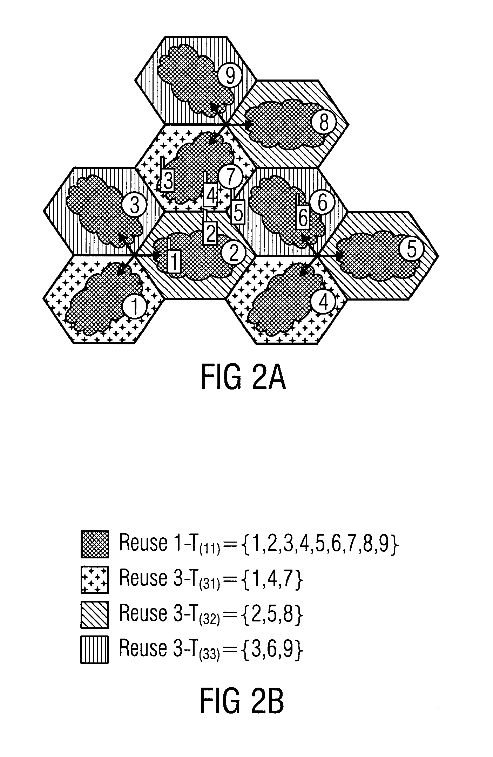

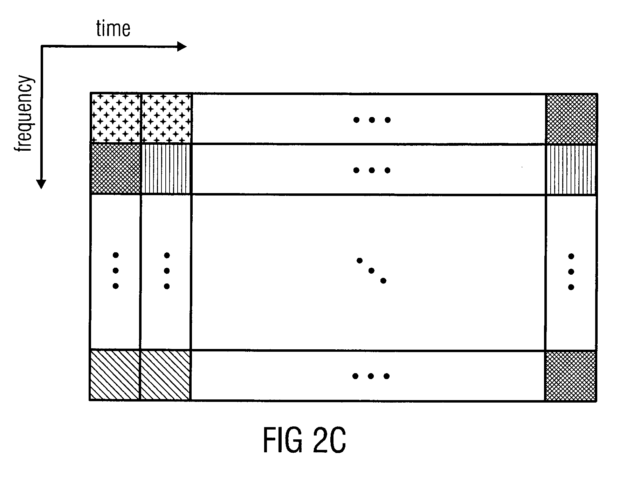

The principal underlying the fractional reuse approach will be described in the following with regard to Fig. 2 on the basis of a small three sectorized cellular network. Fig. 2(a) shows the cellular network which comprises the cells 1 to 9 each comprising a respective transmitter. In Fig. 2(b) the resource blocks, for example the frequencies, used by the respective transmitters in the cells are depicted. Each transmitter 1 to 9 operates at the cell center at the same frequency, however, at the cell edge region different resource blocks are provided, more specifically resource blocks (frequencies) different from the resource block of adjacent cells. Further, as can be seen from Fig. 2(a), it is assumed that six users (see user equipments 1 to 6) are currently in the network. Thus, the network comprises nine transmitters, i.e. T = {1,...,9}, and six users, i.e. $\mathcal{K}$ = {1,2,3,4,5,6}. A reuse of one (see Fig. 2(b)) is an uncoordinated scheme in accordance with which all transmitters $\mathcal{T}_{\ell\,(11)}$ = T = {1, ... ,9} are active on the same resource blocks. To obtain a reuse of three the transmitter sets $\mathcal{T}_{\ell\,(31)}$ = {1,4,7}, $\mathcal{T}_{\ell\,(32)}$ = {2,5,8}, and $\mathcal{T}_{\ell\,(33)}$ = {3,6,9} are active on distinct resource blocks such that neighboring sectors are inactive or do not interfere. Fig. 2(c) depicts the use of the different resource blocks, frequencies, in the network of Fig. 2(a) over time. As can be seen the transmitter sets $\mathcal{T}_{\ell\,(31)}$ = {1,4,7}, $\mathcal{T}_{\ell\,(32)}$ = {2,5,8}, and $\mathcal{T}_{\ell\,(33)}$ = {3,6,9} are active within respective time slots in such a way that neighboring sectors do not interfere.

Fractional reuse is based on predetermined reuse patterns and a static resource allocation. Changing user distributions and traffic loads can be taken into account by dynamic resource allocation. Currently, for LTE the fractional reuse by dynamic resource allocation is established via Relative Narrowband Transmit Power (RNTP) indicators. These indicators are communicated to neighboring eNBs to indicate resources where the eNB intends to transmit with transmit power below or above a threshold. The reaction is not standardized, but scheduling cell-edge users on resources where high interference is expected will be avoided, which automatically establishes fractional reuse. Although providing a simple protocol, avoiding explicit enumeration of reuse patterns, and allowing for large degrees of freedom for the schedulers, RNTP indicators alone are not powerful enough. Conflicting restrictions lead to suboptimal scheduling decisions and resource allocations, or require additional mechanisms to negotiate a resolution, as is described in [2].

A different approach comes from the context of advanced MU-MIMO transmission. The rather theoretic framework in [3] is based on active management of the resources assigned to predetermined reuse patterns. The framework makes several idealized assumptions, which prevent a direct implementation. Practical solutions for most of these issues are discussed in [4], however, there is no signaling scheme between eNBs and UEs.

In the following reference is made to the fractional reuse in LTE-(A). For a static fractional reuse, it is assumed that reuse patterns and resource allocation have been decided in the network planning phase. The decision if a user needs to be protected from interference can for example be based on average reference signal strength related to the average interference power. In general, such information is available to support handover decisions, for example by means of the Reference Signal Received Quality (RSRQ) indicator in LTE. This means, for static fractional reuse no additional signaling between the base station and the users is required.

A more advanced inter-cell interference coordination (ICIC) in LTE Rel. 8 can be performed semistatic, typically on a timescale of seconds or longer. The specific implementations of ICIC are not part of a standard, but the signaling to be used for coordination schemes is specified. ICIC in LTE Rel. 8 builds on binary indicators for each resource block to announce if a transmitter will keep transmission power below a certain threshold. The standardized signaling for the downlink are Relative Narrowband Transmit Power (RNTP) indicators, simple "on-off" masks for each resource block. The RNTP indicators of the neighboring cells can be used in the scheduling algorithm, for example to avoid scheduling cell-edge users on resource blocks with high interference. In this way fractional reuse is implicitly implemented, for example by avoiding to schedule cell-edge users on resource blocks with high interference (see e.g. [5] for further details). The exact method on what RNTPs to choose and how to include them in the scheduling decision is left open. The scheduling decisions need to be based on information from the existing signaling, which does not include specific information to further enhance dynamic fractional reuse, which makes resource allocation on a faster timescale difficult to implement. As part of the HetNet approach, LTE Rel. 10 introduces the concept of an almost blank subframe (ABS) in time domain called eICIG. ABS are used to coordinate the interference of marco cells caused to the pico cells in the network.

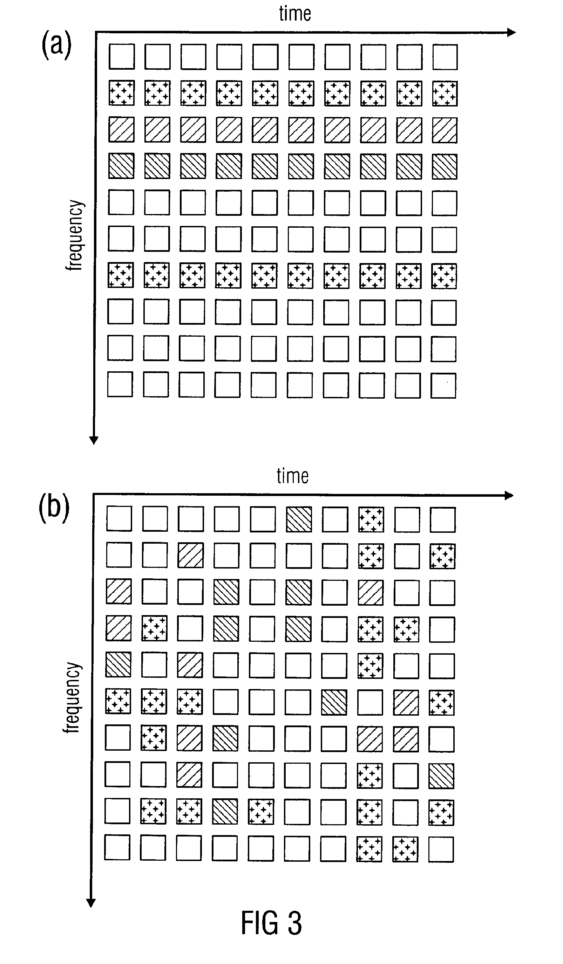

Reference is now made to the fractional reuse by scheduling of physical layer modes. The basic idea of fractional reuse for advanced multi-user systems is presented in [3]. A wireless cellular network with a set of eNBs $T, T = \|\mathcal{T}\|$ is considered. A reuse pattern determines the subsets of eNBs which are allowed to be active on shared resources. The cellular network as illustrated in Fig. 2(a) is considered and the eNBs are divided into three groups: {1,4,7}, {2,5,8} and {3,6,9}. To avoid the dominant interference of neighboring eNBs a frequency reuse of three is applied by assigning exclusive resources to each of the three groups or subsets. The price paid for reducing the interference is that less resources are available when compared to a frequency reuse of one, where all eNBs {1,..., 9} are active on all resources. The intuition behind fractional reuse is that some users need protection from ICI, while for stronger users removing interference does not pay off, as in turn the rate is reduced by the smaller fraction of assigned resources. Fig. 3 (a) illustrates a static resource allocation in the frequency domain to establish a mix between a reuse of one and a reuse of three.

Employing a very general interpretation of fractional reuse as an active management of resources assigned to predefined subsets of the eNBs allows for arbitrary network layouts and reuse configurations. To enable real time adaption to changing user distributions and traffic demands, the resource assignment can be dynamic and is not limited to the frequency domain, see Fig. 3(b).

The interference management may be considered as an optimization problem. Due to shared resources and interference the data rates $r = [r_1, ..., r_K]^T \in \mathcal{R}$ that can be achieved by the set of UEs $\mathcal{K}$ are interdependent, which is universally modeled by the achievable rate region $\mathcal{R}$. According to [3], fractional reuse by active resource allocation can be modeled as a network utility optimization (NUM) problem, where $\mathcal{R}$ is parameterized by the scheduling of physical layer modes. Conceptionally, a set of physical layer modes $\mathcal{N}, N = |\mathcal{N}|$ is introduced, each one of them representing a subset of eNBs allowed to be active on a shared resource. For example, when considering a mix of a reuse of one and a reuse of three as mentioned above, N = 4 physical layer modes are obtained for the following subsets: {1,...,9} for the reuse of one, and {1,4,7}, {2,5,8} and {3,6,9} for the reuse of three.

The achievable rates depend on the interferers present, so that each physical layer mode has a different associated rate region $\mathcal{R}_n$ and the rates achievable by scheduling of the physical layer modes can be described by the convex hull or envelope $\mathcal{R} = co\{\mathcal{R}_1, ..., \mathcal{R}_N\}$ of the individual rate regions. The solution to the NUM can be found by solving a sequence of weighted sum rate (WSR) optimizations as shown below:

$$\max_r \left\{ \sum_{k \in \mathcal{K}} \lambda_k r_k : r \in \mathrm{co}\{\mathcal{R}_1, \dots, \mathcal{R}_N\} \right\}$$

$$(1)$$

with user weights $\lambda = (\lambda_1, \dots, \lambda_K)$. The weights are updated by some iterative optimization algorithm, for example by means of a dual approach as described in [3].

The WSR optimization is decomposed into a problem per physical layer mode as shown below:

$$\max_{n \in \mathcal{N}} \left\{ \max_{r_n} \left\{ \sum_{k \in \mathcal{K}} \lambda_k r_{n,k} : r_n \in \mathcal{R}_n \right\} \right\}$$

$$(2)$$

which has an interpretation as a competition for resources among the physical layer modes. Instead of negotiating for the reuse patterns themselves, the patterns are predefined and the best performing is selected. Limiting the attention to a fixed set of predefined patterns (instead of all possible subsets of eNBs) removes the exponential growth in complexity associated with this combinatorial aspect of the optimization.

Further, assuming that interference depends only on the set of interfering eNBs, but not on their scheduling decision or precoding, the problem further decouples into individual subproblems per eNB. Let $\mathcal{K}_t$ be the users served by eNB $t$, the achievable rate region for physical layer mode n is denoted as $\mathcal{R}_{n,t} \subset \mathbb{R}^{|\mathcal{K}_t|}$ and equation (1) can be rewritten as shown below:

$$\max_{n \in \mathcal{N}} \sum_{t \in \mathcal{T}} \max_{r_{n,t}} \left\{ \sum_{k \in \mathcal{K}_t} \lambda_k r_{n,t,k} : r_{n,t} \in \mathcal{R}_{n,t} \right\}$$

$$(3)$$

Finding the pattern to be activated can be seen as a competition for resources among the patterns. A semi-distributed implementation can be obtained by a message exchange protocol among eNBs (see [4] and [6]). The message exchange protocol implies that computing a WSR optimization can be performed locally at the eNBs, and that there is no need to exchange channel state information or user feedback in the network. Every eNB computes a WSR optimization for each physical layer mode the eNB is allowed to be active as shown below:

$$\max_{r_{n,t}} \left\{ \sum_{k \in \mathcal{K}_t} \lambda_k r_{n,t,k} : r_{n,t} \in \mathcal{R}_{n,t} \right\}$$

$$(4)$$

The result of the WSR optimization (scheduling decision) will depend on the users' channel state (respectively the feedback of the users) and the interference situation in the mode considered. In the presence of a high interference strong users will be scheduled, while cell-edge users will be activated in modes where the dominant interferers are inactive. However, there is no feedback protocol to support the computation of multiple scheduling decisions for various interference situations.

It is an object of the invention to provide an improved approach supporting dynamic fractional reuse in a wireless communication system.

This object is achieved by a method of claim 1, a non-tangible computer program product of claim 13, a user equipment of claim 14, and a wireless communication system of claim 15.

(1) In accordance with one aspect of the invention a method for determining at a user equipment of a wireless communication system an interference estimate for at least one of a plurality of reuse patterns of a fractional reuse scheme used by the wireless communication system comprises:

(a) receiving, at the user equipment, information about a reuse pattern currently used by the wireless communication system for a communication with the user equipment, and information about at least one further reuse pattern of the fractional reuse scheme;

(b) determining, by the user equipment, a current interference estimate for the currently used reuse pattern; and

(c) determining, by the user equipment, an interference estimate for the at least one further reuse pattern based on the determined current interference estimate.

The present invention provides an approach for supporting dynamic fractional reuse in a wireless communication system, more specifically an approach that allows estimating the interference situation for different reuse patterns at a receiver or user equipment, i.e. at the location where the interference is actually experienced. The present invention presents a feedback mechanism supporting the computation of multiple scheduling decisions for various interference situations, with the distinctive feature of performing the estimation of the interference situation at the receiver.

(2) The method may further comprise:

(d) generating, by the user equipment, a feedback based on the interference estimate for the at least one further reuse pattern;

(e) sending the feedback to a base station serving the user equipment and/or to one or more interfering base stations; and

(f) performing a resource block allocation in the wireless communication system for the reuse patterns of the fractional reuse scheme based on the feedback from one or more user equipments.

By means of the determination made at the receiver, a respective feedback is generated and sent back to the base station and/or to the interfering base stations for allowing the wireless communication system to perform a scheduling decision for allocating resources within the system. The basic approach for allocating the resource blocks may be done in a conventional way, for example as is described above with regard to equation (4), however, other than in conventional approaches, the feedback on the basis of which this allocation is carried out is provided by the user equipment that generates the feedback based on the interference estimate for the at least one further reuse pattern. Thus, for providing the feedback, the estimation of the interference situation is carried out at the user equipment and signaled back to the base station.

(3) The current interference estimate may be determined based on symbols received at the user equipment which are transmitted by base stations of the currently used reuse pattern, and determining the interference estimate for the at least one further reuse pattern may be further based on symbols received at the user equipment which are transmitted by those base stations of the at least one further reuse pattern which are not included in the currently used reuse pattern.

This is advantageous as reference symbols that are matched to the used reuse patterns provide the interference estimates that can be used to enable an optimized resource allocation by fractional reuse, which is known to provide protection from inter-cell interference for cell-edge users and is therefore able to increase overall system performance.

(4) Determining the interference estimate for the at least one further reuse pattern may comprise:

determining a first interference estimate for interfering base stations of the at least one further reuse pattern which are not included in the currently used reuse pattern *(Ck(In\In'));*

determining a second interference estimate for interfering base stations of the currently used reuse pattern which are not included in the at least one further reuse pattern *(Ck(In'\In));* and

determining the interference estimate for the at least one further reuse pattern by adding to the current interference estimate the first interference estimate reduced by the second interference estimate.

(5) Determining the first interference estimate may comprise:

determining a first sub-estimate based on symbols received at the user equipment which are transmitted by base stations from the intersection of the set of interfering base stations of the at least one further reuse pattern which are not included in the currently used reuse pattern and the set of base stations of the currently used reuse pattern *(Ck(In\In')∩Tk);*

determining a second sub-estimate based on symbols received at the user equipment which are transmitted by base stations from the set of interfering base stations of the at least one further reuse pattern which are not included in the currently used reuse pattern without the set of base stations of the currently used reuse pattern *(Ck(In\In')\Tk);* and

adding the first and second sub-estimates.

(6) Determining the second interference estimate may comprise:

determining a third sub-estimate based on symbols received at the user equipment which are transmitted by base stations from the intersection of the set of interfering base stations of the currently used reuse pattern which are not included in the at least one further reuse pattern and the set of base stations of the currently used reuse pattern *(Ck(In'\In)∩Tk);*

determining a fourth sub-estimate based on symbols received at the user equipment which are transmitted by base stations from the set of interfering base stations of the currently used reuse pattern which are not included in the at least one further reuse pattern without the set of base stations of the currently used reuse pattern *(Ck(In\In')\Tk);* and

adding the third and fourth sub-estimates.

In general, additional reference symbols reduce the resources available for data transmission. The above mentioned approaches (4) to (6) are advantageous as the interference estimates needed for optimized resource allocation by fractional reuse are provided without increasing the amount of reference symbols.

(7) The first and third sub-estimates may be determined based on actual symbols received at the user equipment, and the second and fourth sub-estimates may be determined based on symbols received at the user equipment in the past.

This is advantageous as it enables the interference estimates with reference signals that are already used in LTE.

(8) For determining the interference estimate for the at least one further reuse pattern the second and fourth sub-estimates may be omitted.

This is advantageous as it allows for a tradeoff between accuracy and complexity. More specifically, although omitting some of the estimates reduces the accuracy of the estimation, omitting them reduces computational complexity and memory requirements at the UE.

(9) The respective interference estimates may be determined based on the receive symbol covariance of the symbols at the user equipment transmitted by the respective base stations.

This is advantageous because if an estimate can be made on all the received symbols instead of only the reference symbols (which are a subset) the number of samples is higher which leads to an increased accuracy of the estimation.

(10) The receive symbol covariance of the symbols at the user equipment transmitted by the respective base stations T' may be defined as follows:

$$C_k(T') = \sum_{t' \in T'} H_{k,t'} Q_{t'} H_{k,t'}$$

where:

$H_{k,t'}$      describes the channel between user equipment $k$ and base station $t'$, and

$Q_{t'}$      is the transmit symbol covariance of base station $t'$;

wherein for a user equipment $k$ assigned according to the currently used reuse pattern to base station $t'(k)$ the set of interfering base stations $I_{n'}$ is given by

$$I_{n'} = T_{n'} \setminus \{t'(k)\};$$

wherein the inter-cell interference covariance of user equipment k for the currently used pattern n' is $C_k(I_{n'})$ and the symbol covariance is defined as follows:

$$C_{n',k} = C(\{t'(k)\}) + C(I_{n'}) + \sigma^2 I,$$

where $\sigma^2 I$ is the thermal noise covariance; and
wherein the interference estimate for the at least one further reuse pattern n at the user equipment k is determined as follows:

$$C_k(I_n) = C_k(I_{n'}) + C_k(I_n \setminus I_{n'}) - C_k(I_{n'} \setminus I_n);$$

where

$C_k(I_n \setminus I_{n'})$      is the first interference estimate for the additional interference of the base stations in the at least one further reuse pattern n but not in the currently used pattern $n'$,

$C_k(I_{n'} \setminus I_n)$      is the second interference estimate for the reduction in interference by deactivating the base stations in the currently used pattern $n'$ but not the at least one further reuse pattern $n$.

(11) The interference estimate for the at least one further reuse pattern n at the user equipment $k$ may be determined as follows:

$$C_k(I_n) = C_k(I_{n'}) + \widehat{C}_{n-n',k} - \widehat{C}_{n'-n,k};$$

where

$$\widehat{C}_{n-n',k} = C_k((I_n \setminus I_{n'}) \cap T_k),$$

and

$$\widehat{C}_{n'-n,k} = C_k((I_{n'} \setminus I_n) \cap T_k).$$

(12) $\widehat{C}_{n-n',k}$ may be determined as follows:

$$\widehat{C}_{n-n',k} = \sum_{t \in (I_n \setminus I_{n'}) \cap T_k} c_{k,t} I, \text{ where } c_{k,t} \text{ is the reference signal power; or}$$

$$\widehat{C}_{n-n',k} = \sum_{t \in (I_n \setminus I_{n'}) \cap T_k} \frac{P}{N_{tx}} H_{k,t} H_{k,t}^H, \text{ where } Q_t = \frac{P}{N_{tx}} I,$$

or

$$\widehat{C}_{n-n',k} = \sum_{t \in (I_n \setminus I_{n'}) \cap T_k} \widehat{H}_{k,t} \widehat{H}_{k,t}^H, \text{ where } \widehat{H}_{k,t} = \sqrt{\frac{P}{N_{tx}}} H_{k,t};$$

and

$$\widehat{C}_{n-n',k} \text{ may be determined as follows:}$$

$$\widehat{C}_{n'-n,k} = \sum_{t \in (I_{n'} \setminus I_n) \cap T_k} c_{k,t} I, \text{'}$$

where $c_{k,t}$ is the reference signal power; or

$$\widehat{C}_{n'-n,k} = \sum_{t \in (I_{n'} \setminus I_n) \cap T_k} \frac{P}{N_{tx}} H_{k,t} H_{k,t}^H, \text{ where } Q_t = \frac{P}{N_{tx}} I,$$

or

$$\widehat{C}_{n'-n,k} = \sum_{t \in (I_{n'} \setminus I_n) \cap T_k} \widehat{H}_{k,t} \widehat{H}_{k,t}^H, \text{ where } \widehat{H}_{k,t} = \sqrt{\frac{P}{N_{tx}}} H_{k,t}.$$

(13) In accordance with another aspect of the invention a non-tangible computer program product includes instructions stored on a computer readable medium which, when running on a computer, execute the inventive method.

(14) In accordance with yet another aspect the invention provides a user equipment of a wireless communication system using a fractional reuse scheme including a plurality of reuse patterns, wherein the user equipment is configured to determine an interference estimate for at least one of the plurality of reuse patterns of the fractional reuse scheme used by the wireless communication system in accordance with the inventive method.

(15) In accordance with a further aspect the invention provides a wireless communication system comprising a plurality of base stations and a plurality of the inventive user equipments.

In accordance with embodiments, the present invention provides a signaling method to support dynamic fractional reuse that comes with minimal changes to an existing architecture, e.g. the LTE-A architecture. The signaling is complemented by an estimation of the interference situation at the receiver that takes into account the reduced/additional interference of the used interference configurations offered by fractional reuse.

In accordance with embodiments, for a network-wide resource allocation, every eNB computes a potential scheduling (and precoding) decision, e.g. by the WSR optimization (see equation 4 above) for every reuse pattern. The achievable rates of the users that constitute $\mathcal{R}_{1\,n,t}$, depend on the interference situation for the pattern. In accordance with the inventive approach the estimation of the interference situation is performed at the receiver and, in accordance with further embodiments, a method for signaling among UE and eNB is provided that allows to compute a potential scheduling (and precoding) decision, e.g. by the WSR optimization (see equation 4 above) for every reuse pattern. This signaling method avoids the explicit feedback of interference levels or CSI on interfering channels. Indeed, the method is independent of the specific downlink transmission strategy used and the feedback structure is unchanged. The receivers perform the estimation of the interference situation. To be aware of the reuse patterns available in the network, information about the reuse patterns available in the network may be conveyed to the receiver.

In accordance with embodiments, for estimating the interference situation for all relevant patterns at the receiver, for one of the patterns an estimate may be performed directly from the receive symbols. This may either be the data symbols that are sent according to one of the patterns and/or the reference symbols that match one of the patterns. Based on this estimate the estimates for all other patterns are computed by considering the additional/removed interferers. For this reference signals from the interfering eNBs are used.

Embodiments provide a more specific and more accurate estimation technique for robust MU-MIMO (see [7, 8, 9]), assuming that CSI to interfering eNBs is available.

Advantages of embodiments of the invention are the provision of

- a signaling method among UE and eNB to support fractional reuse,
- a general approach for interference estimation at the receiver, and
- a specific interference estimation approach for robust MU-MIMO.

Embodiments of the invention will now be described with reference to the accompanying drawings, in which:

Fig. 1    shows a small portion of a cellular network,

Fig. 2    shows a small three sectored cellular network, wherein Fig. 2(a) shows the cellular network, wherein Fig. 2(b) shows the resource blocks used by the respective transmitters in the cells, and wherein Fig. 2(c) depicts the use of the different resource blocks, e.g. frequencies, in the network of Fig. 2(a) over time,

Fig. 3    is a schematic representation of the resource allocation for the fractional reuse, wherein Fig, 3(a) shows a fixed resource allocation, and wherein Fig. 3(b) shows a dynamic resource allocation,

Fig. 4    is a message sequence chart for the signaling associated with an embodiment of the present invention,

Fig. 5    shows a table summarizing the main parameters used for numerical simulations,

Fig. 6    is a graph showing the empirical CDF - proportional fairness ($\alpha$=1),

Fig. 7    is a graph showing the empirical CDF - higher fairness ($\alpha$=3), and

Fig. 8    is a graph showing the throughput fairness trade-off.

In the following, embodiments of the present invention will be described in further detail. In accordance with embodiments of the present invention, every user is made aware of the reuse pattern employed by the network and performs an estimation of the interference situation for every pattern. The interference situation, for example constituted by the estimated symbol covariance and/or inter-cell interference covariance, is used to compute a feedback, usually employing some kind of SINR approximation. The specific method for the feedback computation depends on the MIMO strategy used, and the structure of the feedback information, for example the preferred precoders or the quantized channel state information, does not need to be changed. In the following, the basic message exchange protocol for the signaling among the UEs and eNBs will be described as well as the estimation of the interference situation. Also, performance gains of the fractional reuse scheme which are enabled by the inventive approach will be demonstrated on the basis of numerical simulations.

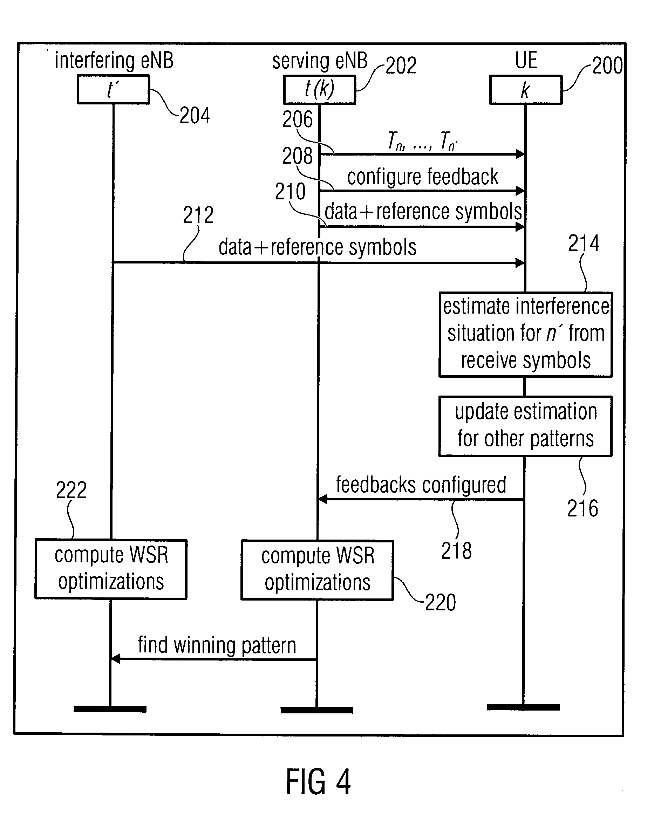

Fig. 4 shows a sequence diagram of a message exchange protocol in accordance with embodiments of the present invention. Fig. 4 shows a user equipment 200, its serving base station 202 and, in the depicted embodiment, a single interfering base station 204. The user equipment 200 receives from the serving base station 202 the reuse patterns 206 used as well as information 208 how the feedback is to be configured. Further, the user equipment 200 receives data and reference symbols 210 from the serving base station 202 and data and reference symbols 212 from the interfering base station 204. The information 206 about the reuse patterns includes information about the currently used reuse pattern *n'* and also information about one or more other reuse patterns n used by the system. At block 214, at the user equipment user 200, from the symbols 210, 212 received from the serving base station 202 and the interfering base station 204, respectively, the interference situation for the currently used reuse pattern n' is estimated. On the basis of this estimation, at block 216, at the user equipment 200 the estimation for one or more of the other reuse patterns about which the user equipment has been informed by message 206 are updated and feedback information is generated at the user equipment 200 and transmitted at 218 from the user equipment 200 to the serving base station 202. In accordance with embodiments, the serving base station 202 and the interfering base station 204 may compute WSR optimizations (see blocks 220 and 222) for the resource allocation for finding a winning pattern to be used in the communication system.

As has been described with regard to Fig. 4, in accordance with the inventive approach, in accordance with embodiments, the interference situation is estimated at the receiver 200, and an approach for signaling among the user 200 and the base station 202 is provided. The receiver 200 performs the estimation of the interference situation. For this, as outlined above, the receiver 200 receives the reuse patterns available in the network, and this information, as shown at 206 in Fig. 4, is conveyed from the serving base station 202 to the receiver 200. The receiver or user 200 estimates the interference situation for one of the patterns directly from the received symbols 210, 212, which may for example be data symbols that are sent according to one of the patterns and/or reference symbols that match one of the patterns. The one pattern for which the interference situation is estimated may be the currently used reuse pattern n'. Based on this estimate, the user equipment 200 computes the interference estimates for one or more of the remaining patterns which, in accordance with embodiments, is done by considering additional/removed interferers, as will be described in further detail below. Following the estimation of the respective interference situations, the user 200 computes and sends the feedback for the pattern currently configured for feedback. The feedback needs to be associated with the correct reuse pattern, which needs to be part of the feedback mechanism. For example, LTE supports both periodic and aperiodic feedback. In LTE, this needs to be extended by one additional dimension to support the feedback for multiple patterns.

Once the feedback has been received, the base stations are able to compute the WSR optimizations as described above and to find a winning pattern by an appropriate message exchange among the base stations as is for example described in [4] and [6].

In the following, an embodiment for the interference estimation at the receiver 200 will be described in further detail. It is assumed that the user 200 can obtain an accurate estimate of the interference situation for one of the patterns, for example the pattern n' currently used for the data transmission. The embodiment described may use CSI (channel state information) to the interfering transmitter 204 to improve the estimates of the interference situation for each pattern. This may be especially beneficial for systems that build on robust unitary precoding, where the influence of an interfering base station only depends on the channel realization but is independent of the scheduling and precoding.

In accordance with the present invention, an approach is taught that is not dependent on the specific MIMO technique used; such techniques may employ different methods for feedback computation and SINR approximation that may be based on the interference symbol covariance, the noise covariance, and/or the receive symbol covariance where the relation is given in equation (7) below. In the following description of embodiments of the present invention, the term "interference situation" is used, and the receive symbol covariance of the symbols transmitted by the base stations *t'* at the user *k* are defined as shown in equation (5) below:

$$C_k(T') = \sum_{t' \in T'} H_{k,t'} Q_{t'} H_{k,t'}$$

(5)

where $H_{k,t'}$ describes the channel between user equipment *k* and base station *t'*, and $Q_{t'}$ is the transmit symbol covariance of base station *t'*. Assuming that a resource block is assigned to pattern n', for a user assigned to eNB *t'(k)* the set of interfering eNBs is given as follows:

$$I_{n'} = T_{n'} \setminus \{t'(k)\}.$$

$$(6)$$

The inter-cell interference covariance of user k for pattern n' *is* $C_k(I_{n'})$ and the symbol covariance can be written as shown below:

$$C_{n', k} = C(\{t'(k)\}) + C(I_{n'}) + \sigma^2 I,$$

$$(7)$$

where $\sigma^2 I$ is the thermal noise covariance.

In the following it will be shown how the interference situation of pattern n is different compared to the pattern n' (e.g. the difference between the currently used pattern *n'* and another pattern n):

$$C_k(I_n) = C_k(I_{n'}) + C_k(I_n \setminus I_{n'}) - C_k(I_{n'} \setminus I_n),$$

$$(8)$$

$C_k(I_n \setminus I_{n'})$ is the additional interference by allowing the eNBs in pattern n but not in pattern *n'*. $C_k(I_{n'} \setminus I_n)$ is the reduction in interference by deactivating the eNBs allowed in pattern n' but not in patter *n*.

For the special case where $T_n \subset T_{n'}$, $C_k(I_n \setminus I_{n'}) = 0$ and $C_k(I_{n'} \setminus I_n)$ is the interference that can be removed by switching from *n'* to n. This will be illustrated for the scenario in Figure 2(a) and a user k that is served by eNB $t(k) = 1$. For $T_{n'} = \{1,...,9\}$, $In = \{2,..., 9\}$ and $T_n = \{1,4,7\}$, $I_n = \{4,7\}$, interference situation of pattern n is determined as follows:

$$C_k(I_n) = C_k(I_{n'}) + C_k(I_n \setminus I_{n'}) - C_k(I_{n'} \setminus I_n)$$

$$= C_k(\{2,\dots,9\}) + C_k(\varnothing) - C_k(\{2,3,5,6,8,9\})$$
$$= C_k(\{2,\dots,9\}) - C_k(\{2,3,5,6,8,9\})$$
$$= C_k(\{4,7\})$$

$$(9)$$

It is assumed that a user can gain an accurate estimate of the interference situation for one of the patterns n', e.g. from the data symbols themselves or from reference signals that follow one of the patterns. To estimate the interference situation for another pattern n, $C_k(I_n \setminus I_{n'})$ and $C_k(I_{n'} \setminus I_n)$ are estimated. This estimation may be using information obtained by reference signals of the neighboring eNBs.

As in [6], let $T_k$ be the set of transmitters from which a user may receive and decode a reference signal, for example the "Reference Signal Received Quality" (RSRQ) or a reference signal for the CSI estimation. $C_k(I_n \setminus I_{n'})$ is split into two parts

$$C_k(I_n \setminus I_{n'}) = C_k((I_n \setminus I_{n'}) \cap T_k) + C_k((I_n \setminus I_{n'}) \setminus T_k)$$

$$(10)$$

It is assumed that $T_k$ includes the most dominant interferers and therefore $C_k((I_n \setminus I_{n'}) \cap T_k)$ will be the dominant part of the sum in equation 10.

Considering again the above example and assuming that the user can decode a reference signal of the neigh-

boring eNBs $T_k = \{1,2,3\}$, this yields:

$$
\begin{aligned}
C_k(I_n \setminus I_{n'}) &= C_k((I_n \setminus I_{n'}) \cap T_k) + C_k((I_n \setminus I_{n'}) \setminus T_k) \\
&= C_k(\{2,3,5,6,8,9\} \cap \{1,2,3\}) + C_k(\{2,3,5,6,8,9\} \setminus \{1,2,3\}) \\
&= C_k(\{2,3\}) + C_k(\{5,6,8,9\})
\end{aligned}
\tag{11}
$$

For $C_k((I_n \setminus I_{n'}) \cap T_k)$ an accurate estimate

$$
\widehat{C}_{n-n',k} \approx C_k((I_n \setminus I_{n'}) \cap T_k)
\tag{12}
$$

that is based on the available reference signal measurements can be used. For $C_k((I_n \setminus I_{n'}) \setminus T_k)$ a higher error may be tolerated and the following arbitrary approximation may be used

$$
\widetilde{C}_{n-n',k} \approx C_k((I_n \setminus I_{n'}) \setminus T_k).
\tag{13}
$$

For example, $\widetilde{C}_{n-n',k}$ may be based on symbol samples from the past. The same way

$$
C_k(I_{n'} \setminus I_n) = C_k((I_{n'} \setminus I_n) \cap T_k) + C_k((I_{n'} \setminus I_n) \setminus T_k)
\tag{14}
$$

is defined, as well as

$$
\widehat{C}_{n'-n,k} \approx C_k((I_{n'} \setminus I_n) \cap T_k)
\tag{15}
$$

$$
\widetilde{C}_{n'-n,k} \approx C_k((I_{n'} \setminus I_n) \setminus T_k)
\tag{16}
$$

Applying equation (8) the estimate of $C_k(I_n)$ is obtained by

$$
\begin{aligned}
C_k(I_n) &= C_k(I_{n'}) + C_k(I_n \setminus I_{n'}) - C_k(I_{n'} \setminus I_n) \\
&= C_k(I_{n'}) + C_k((I_n \setminus I_{n'}) \cap T_k) + C_k((I_n \setminus I_{n'}) \setminus T_k) \\
&\quad - (C_k((I_{n'} \setminus I_n) \cap T_k) + C_k((I_{n'} \setminus I_n) \setminus T_k)) \\
&\approx C_k(I_{n'}) + \widehat{C}_{n-n',k} + \widetilde{C}_{n-n',k} - \widehat{C}_{n'-n,k} - \widetilde{C}_{n'-n,k}
\end{aligned}
\tag{17}
$$

The estimation of $\tilde{C}_{n-n',k}$ and $\tilde{C}_{n'-n,k}$ may be disregarded. The two terms may be disregarded because, in general, they have much less influence on the estimate than the other two. So disregarding them leads to a less accurate estimate but allows to save on computational complexity and memory requirements.

In the following two approaches for the estimation of $\hat{C}_{n-n',k}$ and $\hat{C}_{n'-n,k}$, respectively, are given. For example, for general MU-MIMO strategies, the structure of any receive symbol covariance given by equation (5) will depend on the eNBs' transmit covariances, which depend on the scheduling and precoding used. Therefore even in case perfect CSI information is available, there will be an uncertainty in the estimate. Therefore, for general MIMO techniques an estimation based on a white covariance may be used:

$$\mathbf{C}_k((I_n \setminus I_{n'}) \cap T_k) \approx \widehat{C}_{n-n',k} = \sum_{t \in (I_n \setminus I_{n'}) \cap T_k} c_{k,t} \mathbf{I},$$

$$(18)$$

where $c_{k,t}$ may be obtained from a reference signal measurement, for example the reference signal power. A more accurate estimate can be found for robust MU-MIMO (see [7]), for example a robust unitary precoding (see [8, 9]). By artificially enforcing $Q_t = \frac{P}{N_{tx}} I$, the structure of any receive symbol covariance given by equation (5) depends on the set of eNBs and the associated channels but is independent of the specific scheduling and precoding:

$$\mathbf{C}_k((I_n \setminus I_{n'}) \cap T_k) \approx \widehat{C}_{n-n',k} = \sum_{t \in (I_n \setminus I_{n'}) \cap T_k} \frac{P}{N_{tx}} H_{k,t} H_{k,t}^H$$

$$(19)$$

In case error free knowledge of the scaled channel matrices $\sqrt{\frac{P}{N_{tx}}} H_{k,t}$ is available at the receiver the estimate can be computed by equation (19). In practice, the CSI will be obtained by a channel estimation via reference signals. Let $\hat{H}_{k,t}$ be an estimate of $\sqrt{\frac{P}{N_{tx}}} H_{k,t}$, the estimation can be computed as follows:

$$\mathbf{C}_k((I_n \setminus I_{n'}) \cap T_k) \approx \widehat{C}_{n-n',k} = \sum_{t \in (I_n \setminus I_{n'}) \cap T_k} \widehat{H}_{k,t} \widehat{H}_{k,t}^H$$

$$(20)$$

Analog to equations (18) and (20) estimates for $\hat{C}_{n'-n,k}$ can be computed as follows:

$$\widehat{C}_{n'-n,k} = \sum_{t \in (I_{n'} \setminus I_n) \cap T_k} c_{k,t} \mathbf{I},$$
$$\widehat{C}_{n'-n,k} = \sum_{t \in (I_{n'} \setminus I_n) \cap T_k} \frac{P}{N_{tx}} H_{k,t} H_{k,t}^H, \text{ or}$$
$$\widehat{C}_{n'-n,k} = \sum_{t \in (I_{n'} \setminus I_n) \cap T_k} \widehat{H}_{k,t} \widehat{H}_{k,t}^H.$$

$$(21)$$

Thus, in accordance with embodiments, the user can estimate the interference situation for a pattern n', which can be, for example, the interference plus noise covariance or the symbol covariance. Assuming that the eNB expects a feedback for pattern n the user may compute $\hat{C}_{n-n',k}$ and $\hat{C}_{n'-n,k}$. Together with $\tilde{C}_{n-n',k}$ and $\hat{C}_{n'-n,k}$ the user may estimate the interference situation for n and compute and send the configured feedback.

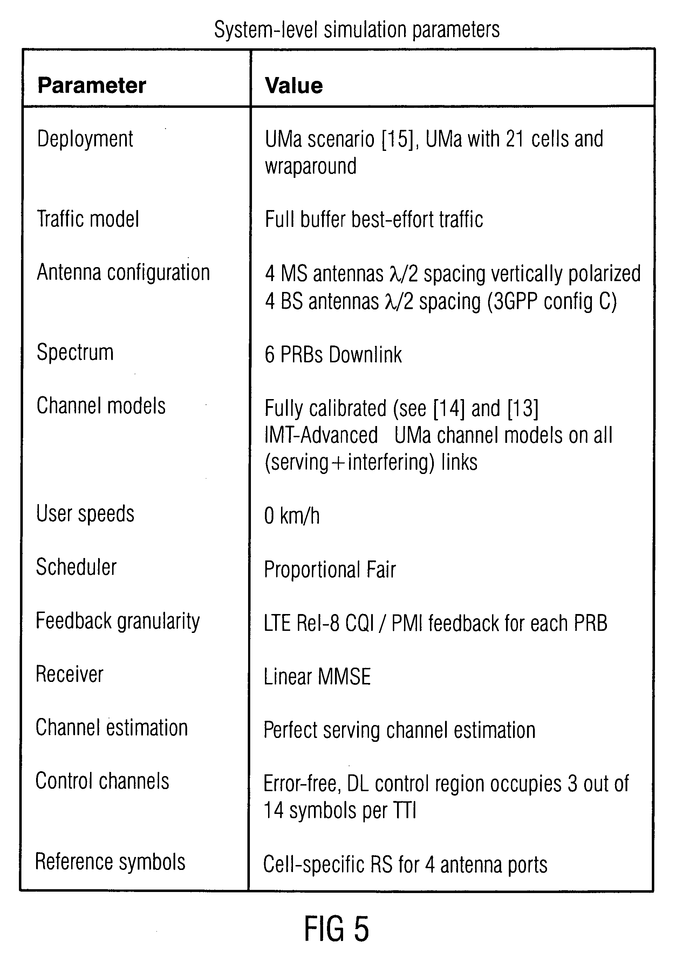

In the following simulation results will be discussed which were obtained from the IMTAphy LTE-A system-level

EP 2 852 238 A1

simulator (see [13]). IMTAphy features an efficient and fully calibrated (see [14]) C++ implementation of the IMT-Advanced channel models (see [15]), as well as a link-to-system model suitable for simulations of LTE-A (see [16]). Fig. 5 shows a table summarizing the main parameters used for the numerical simulations. All other parameters are chosen according to [15] and [17, A.2.2]. Due to the robustness MIMO technique used and the static channels considered for this simulations, outages are rare, which allows to disable HARQ without significant loss of performance.

For the fractional reuse, a mix of a reuse of one and a reuse of three was considered. As in the example above, this implies that every eNB is allowed to transmit in two of the four available physical layer modes. Resource allocation to physical layer modes is allowed for every individual PRB (Physical Resource Block, e.g. frequency), meaning that every eNB communicates twice the number of available PRBs to the central controller in every slot.

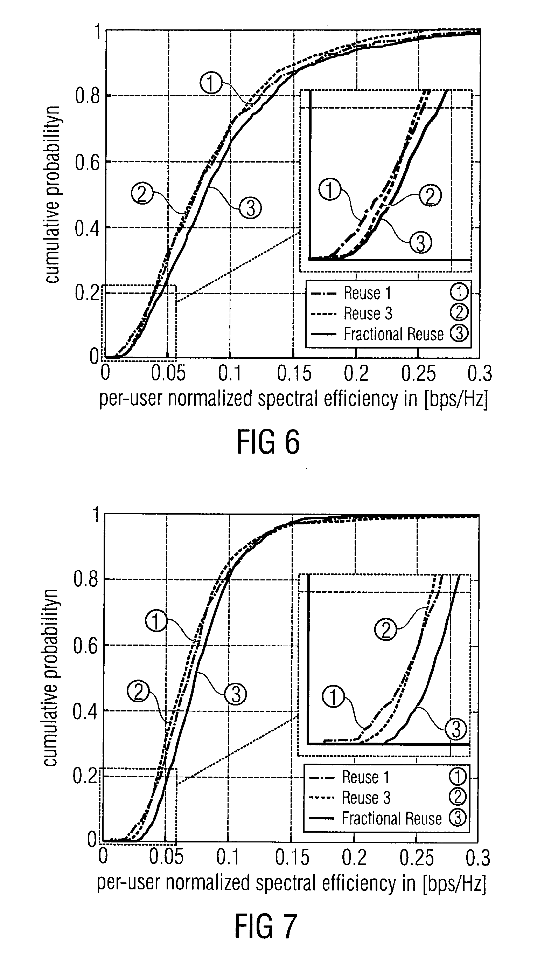

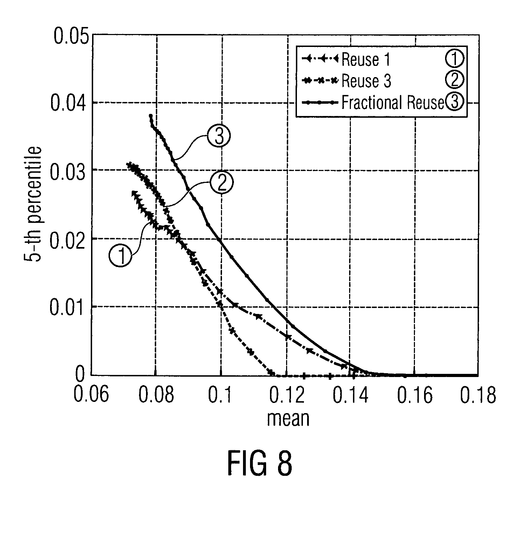

Regarding the performance, Fig. 6 shows the empirical CDF of the normalized user spectral efficiency. As expected, fractional reuse outperforms pure reuse of one and reuse of three and especially the cell-edge users benefit. Even more significant gains can be observed for higher levels of fairness, see Fig. 7. Alternating the level of fairness trades off performance of the cell-edge user and the average cell performance. In order to further investigate this trade-off and the potential of fractional reuse in this context, simulations were performed for $\alpha$ = 0, 0.1; ... , 3. For every result the average cell performance, given by the mean of the empirical CDF, and the performance of the cell-edge users, given by the 5-th percentile of the empirical CDF, were compared. The complete trade-off curves are shown in Fig. 8. One can see the cross-over between the reuse of one and the reuse of three for increased fairness.

As expected, for all levels of fairness fractional reuse is at least as good as the reuse of one or the reuse of three. For higher levels of fairness a significant gain in performance can be observed. For example, in case a 5-th percentile of 0.02 is desired, both reuse of one and reuse of three have an average performance of 0.085, while the average performance of the fractional reuse is 0.1 - this is an increase of about 18%.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed. Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier. Other embodiments comprise the computer program for performing one of the methods described herein, stored on a machine readable carrier. In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein. A further embodiment comprises a computer having installed thereon the computer program for performing one of the methods described herein. In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

**Bibliography**

[1] S. W. Halpern, "Reuse partitioning in cellular systems," 33rd IEEE Vehicular Technology Conference, 1983, vol. 33, pp. 322 - 327, May 1983.

[2] M. Rahman, H. Yanikomeroglu, and W. Wong, "Fractional reuse partitioning for MIMO networks," in Proc. Wireless Communications and Networking Conference, Apr. 2009, pp. 1-6.

[3] A. Dotzler, W. Utschick, and G. Dietl, "Fractional reuse partitioning for MIMO networks," in Proc. IEEE Global Telecommunications Conference (GLOBECOM 2010), Dec. 2010, pp. 1-5.

[4] C. Dietrich, A. Dotzler, G. Dietl, and W. Utschick, "Fractional reuse for LTEAdvanced," in submitted to IEEE International Conference on Communications 2013: IEEE ICC'13 - Second IEEE Workshop on Telecommunication Standards: From Research to Standards, 2013.

[5] S. Sesia, I. Toufik, and M. Baker, LTE, The UMTS Long Term Evolution: From Theory to Practice, 2nd ed. Wiley Publishing, 2009.

[6] A. Dotzler, W. Utschick, and G. Dietl, "Load-aware dynamic cell selection with interference coordination by fractional reuse for cellular multi-user networks," European Patent EP 2 525 523 A1, Nov., 2012.

[7] A. Dotzler, M. Riemensberger, W. Utschick, and G. Dietl, "Interference robustness for cellular MIMO networks," in 2012 IEEE 13th International Workshop on Signal Processing Advances in Wireless Communications (SPAWC), Jun. 2012, pp. 229 -233.

[8] A. Dotzler, W. Utschick, and G. Dietl, "Transmission filter calculator, communication device and methods," European Patent Application 12 162 634.5, 2012.

[9] A. Dotzler, G. Dietl, and W. Utschick, "Unitary precoding for MIMO interference networks," in Proc. IEEE Global Communications Conference (GLOBECOM 2012), Dec. 2012, pp. 3874-3879.

[10] A. Dotzler, W. Utschick, and G. Dietl, "Fractional reuse partitioning for MIMO networks," in 2010 IEEE Global Telecommunications Conference (GLOBECOM 2010). IEEE, Dec. 2010, pp. 1-5.

[11] A. Khandekar and A. Agrawal, "Rate prediction in fractional reuse systems," WO/2006/020 032, Feb., 2006.

[12] C. Chen, H. Yin, H. Sun, and H. Yang, "TECHNIQUES FOR FEEDBACK IN CELLULAR SYSTEMS TO MITIGATE INTERFERENCE IN DOWNLINK," U.S. Patent 20 090 247 148, Oct., 2009.

[13] J. Ellenbeck, "IMTAphy channel model, link-to-system model, and LTE simulator documentation website," Jan. 2012. [Online]. Available: http://www.lkn.ei.tum.de/personen/jan/imtaphy/index.html

[14] J. Ellenbeck, O. Mushtaq, F. Sheikh, and S. Q. Shahrukh, "Calibrating an efficient C++ implementation of the ITU-R M.2135 channel model for use in system-level simulations," in Proc. International Workshop on Propagation and Channel Modeling for Next-Generation Wireless Networks, Mar. 2011.

[15] ITU-R, "Guidelines for evaluation of radio interface technologies for IMT-Advanced," ITU Radiocommunication Sector, Rep. ITU-R M.2135-1, Dec. 2009.

[16] J. Ellenbeck, "System-level simulations with the IMT-Advanced channel model," in LTEAdvanced and Next Generation Wireless Networks: Channel Modelling and Propagation, G. de la Roche, A. Alayón-Glazunov, and B. Allen, Eds. John Wiley and Sons, 2012, ch. 13.

[17] 3GPP, "Evolved Universal Terrestrial Radio Access (E-UTRA); Further advancements for EUTRA physical layer aspects," 3rd Generation Partnership Project (3GPP), TR 36.814 Release 9, Mar. 2010.

**Claims**

1. A method for determining at a user equipment (110, 112, 200) of a wireless communication system an interference estimate for at least one of a plurality of reuse patterns of a fractional reuse scheme used by the wireless communication system, the method comprising:

   (a) receiving (206), at the user equipment (110, 112, 200), information about a reuse pattern currently used by the wireless communication system for a communication with the user equipment (110, 112, 200), and information about at least one further reuse pattern of the fractional reuse scheme;
   (b) determining (214), by the user equipment (110, 112, 200), a current interference estimate for the currently used reuse pattern; and
   (c) determining (216), by the user equipment (110, 112, 200), an interference estimate for the at least one further reuse pattern based on the determined current interference estimate.

2. The method of claim 1, comprising:

(d) generating (216), by the user equipment (110, 112, 200), a feedback based on the interference estimate for the at least one further reuse pattern;

(e) sending (218) the feedback to a base station (104, 202) serving the user equipment (110, 112, 200) and/or to one or more interfering base stations (106, 204); and

(f) performing a resource block allocation in the wireless communication system for the reuse patterns of the fractional reuse scheme based on the feedback from one or more user equipments (110, 112, 200).

3. The method of claim 1 or 2, wherein
the current interference estimate is determined based on symbols received at the user equipment (110, 112, 200) which are transmitted by base stations of the currently used reuse pattern; and
determining the interference estimate for the at least one further reuse pattern is further based on symbols received at the user equipment (110, 112, 200) which are transmitted by those base stations of the at least one further reuse pattern which are not included in the currently used reuse pattern.

4. The method of claim 3, wherein determining the interference estimate for the at least one further reuse pattern comprises:

determining a first interference estimate for interfering base stations of the at least one further reuse pattern which are not included in the currently used reuse pattern *(Ck(In\In'))*;
determining a second interference estimate for interfering base stations of the currently used reuse pattern which are not included in the at least one further reuse pattern *(Ck(In'\In))*; and
determining the interference estimate for the at least one further reuse pattern by adding to the current interference estimate the first interference estimate reduced by the second interference estimate.

5. The method of claim 4, wherein determining the first interference estimate comprises:

determining a first sub-estimate based on symbols received at the user equipment (110, 112, 200) which are transmitted by base stations from the intersection of the set of interfering base stations of the at least one further reuse pattern which are not included in the currently used reuse pattern and the set of base stations of the currently used reuse pattern *(Ck(In\In')∩Tk)*;
determining a second sub-estimate based on symbols received at the user equipment (110, 112, 200) which are transmitted by base stations from the set of interfering base stations of the at least one further reuse pattern which are not included in the currently used reuse pattern without the set of base stations of the currently used reuse pattern *(Ck(In\In')\Tk)*; and
adding the first and second sub-estimates.

6. The method of claim 4 or 5, wherein determining the second interference estimate comprises:

determining a third sub-estimate based on symbols received at the user equipment (110, 112, 200) which are transmitted by base stations from the intersection of the set of interfering base stations of the currently used reuse pattern which are not included in the at least one further reuse pattern and the set of base stations of the currently used reuse pattern *(Ck(In'\In)∩Tk)*;
determining a fourth sub-estimate based on symbols received at the user equipment (110, 112, 200) which are transmitted by base stations from the set of interfering base stations of the currently used reuse pattern which are not included in the at least one further reuse pattern without the set of base stations of the currently used reuse pattern *(Ck(In\In')\Tk)*; and
adding the third and fourth sub-estimates.

7. The method of claim 6, wherein the first and third sub-estimates are determined based on actual symbols received at the user equipment (110, 112, 200), and wherein the second and fourth sub-estimates are determined based on symbols received at the user equipment (110, 112, 200) in the past.

8. The method of claim 6 or 7, wherein for determining the interference estimate for the at least one further reuse pattern the second and fourth sub-estimates are omitted.

9. The method of one of claims 1 to 8, wherein the respective interference estimates are determined based on the receive symbol covariance of the symbols at the user equipment (110, 112, 200) transmitted by the respective base stations.

**10.** The method of claim 9,
wherein the receive symbol covariance of the symbols at the user equipment (110, 112, 200) transmitted by the respective base stations *T'* is defined as follows:

$$C_k(\mathcal{T}') = \sum_{t' \in T'} H_{k,t'} Q_{t'} H_{k,t'}$$

where:

$H_{k,t'}$ describes the channel between user equipment *k* and base station *t'*, and
$Q_{t'}$ is the transmit symbol covariance of base station *t'*;

wherein for a user equipment k assigned according to the currently used reuse pattern to base station *t'(k)* the set of interfering base stations $I_{n'}$ is given by

$$I_{n'} = T_{n'} \setminus \{t'(k)\};$$

wherein the inter-cell interference covariance of user equipment *k* for the currently used pattern n' is $C_k(I_{n'})$ and the symbol covariance is defined as follows:

$$C_{n',k} = C(\{t'(k)\}) + C(I_{n'}) + \sigma^2 I,$$

where $\sigma^2 I$ is the thermal noise covariance; and
wherein the interference estimate for the at least one further reuse pattern n at the user equipment k is determined as follows:

$$C_k(I_n) = C_k(I_{n'}) + C_k(I_n \setminus I_{n'}) - C_k(I_{n'} \setminus I_n);$$

where

$C_k(I_n \setminus I_{n'})$ is the first interference estimate for the additional interference of the base stations in the at least one further reuse pattern *n* but not in the currently used pattern *n'*,
$C_k(I_{n'} \setminus I_n)$ is the second interference estimate for the reduction in interference by deactivating the base stations in the currently used pattern *n'* but not the at least one further reuse pattern *n*.

**11.** The method of claim 10, wherein the interference estimate for the at least one further reuse pattern n at the user equipment k is determined as follows:

$$C_k(I_n) = C_k(I_{n'}) + \widehat{C}_{n-n',k} - \widehat{C}_{n'-n,k};$$

where

$$\widehat{C}_{n-n',k} = C_k((I_n \setminus I_{n'}) \cap T_k),$$

and

$$\widehat{C}_{n'-n,k} = C_k((I_{n'} \setminus I_n) \cap T_k).$$

**12.** The method of claim 11,
wherein $\hat{C}_{n-n',k}$ is determined as follows:

$\hat{C}_{n-n',k} = \Sigma t \in (I_n \setminus I_{n'}) \cap T_k\, c_{k,t}\, \mathbf{I}$, where $c_{k,t}$ is the reference signal power; or

$$\widehat{C}_{n-n',k} = \Sigma_{t \in (I_n \setminus I_{n'}) \cap T_k} \frac{P}{N_{tx}} \mathbf{H}_{k,t} \mathbf{H}_{k,t}^H, \text{ where } Q_t = \frac{P}{N_{tx}} \mathbf{I},$$

or

$$\widehat{C}_{n-n',k} = \Sigma_{t \in (I_n \setminus I_{n'}) \cap T_k} \widehat{\mathbf{H}}_{k,t} \widehat{\mathbf{H}}_{k,t}^H, \text{ where } \widehat{\mathbf{H}}_{k,t} = \sqrt{\frac{P}{N_{tx}}} \mathbf{H}_{k,t};$$

and
wherein $\tilde{C}_{n-n',k}$ is determined as follows:

$\hat{C}_{n'-n,k} = \Sigma t \in (I_n \setminus I_n) \cap T_k\, c_{k,t}\, \mathbf{I}$, where $c_{k,t}$ is the reference signal power; or

$$\widehat{C}_{n'-n,k} = \Sigma_{t \in (I_{n'} \setminus I_n) \cap T_k} \frac{P}{N_{tx}} \mathbf{H}_{k,t} \mathbf{H}_{k,t}^H, \text{ where } Q_t = \frac{P}{N_{tx}} \mathbf{I},$$

or

$$\widehat{C}_{n'-n,k} = \Sigma_{t \in (I_{n'} \setminus I_n) \cap T_k} \widehat{\mathbf{H}}_{k,t} \widehat{\mathbf{H}}_{k,t}^H, \text{ where } \widehat{\mathbf{H}}_{k,t} = \sqrt{\frac{P}{N_{tx}}} \mathbf{H}_{k,t}.$$

**13.** A non-tangible computer program product including instructions stored on a computer readable medium which, when running on a computer, execute the method of one of claims 1 to 12.

**14.** A user equipment (110, 112, 200) of a wireless communication system using a fractional reuse scheme including a plurality of reuse patterns, wherein
the user equipment (110, 112, 200) is configured to determine an interference estimate for at least one of the plurality of reuse patterns of the fractional reuse scheme used by the wireless communication system in accordance with the method of one of claims 1 to 12.

**15.** A wireless communication system, comprising:

a plurality of base stations; and
a plurality of user equipments (110, 112, 200) of claim 14.

FIG 1

FIG 2A

Reuse 1-$T_{(11)}$ = {1,2,3,4,5,6,7,8,9}

Reuse 3-$T_{(31)}$ = {1,4,7}

Reuse 3-$T_{(32)}$ = {2,5,8}

Reuse 3-$T_{(33)}$ = {3,6,9}

FIG 2B

FIG 2C

FIG 3

interfering eNB | serving eNB ⌐202 | UE ⌐200

| $t'$ | | $t(k)$ | | $k$ |

204

206

$T_n, ..., T_{n'}$

208

configure feedback

210

data + reference symbols

212

data + reference symbols

214

estimate interference situation for $n'$ from receive symbols

update estimation for other patterns

216

feedbacks configured

222

218

compute WSR optimizations

compute WSR optimizations

220

find winning pattern

FIG 4

## System-level simulation parameters

| Parameter | Value |
|---|---|
| Deployment | UMa scenario [15], UMa with 21 cells and wraparound |
| Traffic model | Full buffer best-effort traffic |
| Antenna configuration | 4 MS antennas $\lambda/2$ spacing vertically polarized 4 BS antennas $\lambda/2$ spacing (3GPP config C) |
| Spectrum | 6 PRBs Downlink |
| Channel models | Fully calibrated (see [14] and [13] IMT-Advanced UMa channel models on all (serving + interfering) links |
| User speeds | 0 km/h |
| Scheduler | Proportional Fair |
| Feedback granularity | LTE Rel-8 CQI / PMI feedback for each PRB |
| Receiver | Linear MMSE |
| Channel estimation | Perfect serving channel estimation |
| Control channels | Error-free, DL control region occupies 3 out of 14 symbols per TTI |
| Reference symbols | Cell-specific RS for 4 antenna ports |

## FIG 5

FIG 6

FIG 7

FIG 8

**Europäisches Patentamt**
**European Patent Office**
**Office européen des brevets**

# EUROPEAN SEARCH REPORT

Application Number

EP 13 18 5135

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2009/047971 A1 (FU I-KANG [TW])<br>19 February 2009 (2009-02-19)<br>* abstract *<br>* figures 1-16B *<br>* paragraphs [0004], [0007] *<br>* paragraphs [0030] - [0034] *<br>* paragraphs [0038] - [0045] *<br>* paragraphs [0049] - [0050] *<br>----- | 1-9,<br>13-15<br>10-12 | INV.<br>H04W72/08<br><br>ADD.<br>H04W72/04 |
| Y<br><br><br><br>A | WOLFGANG UTSCHICK ET AL: "Computing upper bounds for coordinated multipoint transmission in small networks",<br>SMART ANTENNAS (WSA), 2011 INTERNATIONAL ITG WORKSHOP ON, IEEE,<br>24 February 2011 (2011-02-24), pages 1-8,<br>XP031936252,<br>DOI: 10.1109/WSA.2011.5741933<br>ISBN: 978-1-61284-075-8<br>* abstract *<br>* paragraphs [0II.] - [III.] *<br>----- | 10-12<br><br><br><br>1-9,<br>13-15 | |
| A,D | US 2009/247148 A1 (CHEN CLARK [CN] ET AL)<br>1 October 2009 (2009-10-01)<br>* abstract *<br>* figure 4 *<br>* paragraphs [0021] - [0024] *<br>----- | 1-15 | TECHNICAL FIELDS<br>SEARCHED (IPC)<br><br>H04W |
| A | JAN ELLENBECK ET AL: "Interference robustness for MIMO networks System-level performance evaluation for LTE-Advanced",<br>GLOBECOM WORKSHOPS (GC WKSHPS), 2012 IEEE,<br>IEEE,<br>3 December 2012 (2012-12-03), pages 658-663, XP032341452,<br>DOI: 10.1109/GLOCOMW.2012.6477652<br>ISBN: 978-1-4673-4942-0<br>* abstract *<br>* paragraphs [00II] - [0IV.] *<br>----- | 1-15 | |

The present search report has been drawn up for all claims

| Place of search | Date of completion of the search | Examiner |
|---|---|---|
| Munich | 17 February 2014 | Volpato, Andrea |

EPO FORM 1503 03.82 (P04C01)

**ANNEX TO THE EUROPEAN SEARCH REPORT
ON EUROPEAN PATENT APPLICATION NO.**

EP 13 18 5135

This annex lists the patent family members relating to the patent documents cited in  the above-mentioned European search report.
The members are as contained in the European Patent Office EDP file on
The European Patent Office is in no way liable for these particulars which are merely given for the purpose of information.

17-02-2014

| Patent document cited in search report | Publication date | Patent family member(s) | | Publication date |
|---|---|---|---|---|
| US 2009047971    A1 | 19-02-2009 | US | 2009047971 A1 | 19-02-2009 |
| | | US | 2009092059 A1 | 09-04-2009 |
| US 2009247148    A1 | 01-10-2009 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2525523 A1
- EP 12162634 A
- WO 2006020032 A
- US 20090247148 A

### Non-patent literature cited in the description

- **S. W. HALPERN.** Reuse partitioning in cellular systems. *33rd IEEE Vehicular Technology Conference,* May 1983, vol. 33, 322-327
- **M. RAHMAN, H ; YANIKOMEROGLU ; W. WONG.** Fractional reuse partitioning for MIMO networks. *Proc. Wireless Communications and Networking Conference,* April 2009, 1-6
- **A. DOTZLER ; W. UTSCHICK ; G. DIETL.** Fractional reuse partitioning for MIMO networks. *Proc. IEEE Global Telecommunications Conference (GLOBECOM 2010,* December 2010, 1-5
- **C. DIETRICH ; A. DOTZLER ; G. DIETL ; W. UTSCHICK.** Fractional reuse for LTEAdvanced. *IEEE International Conference on Communications 2013: IEEE ICC'13 - Second IEEE Workshop on Telecommunication Standards: From Research to Standards,* 2013
- **S. SESIA ; I. TOUFIK ; M. BAKER.** LTE, The UMTS Long Term Evolution: From Theory to Practice. Wiley Publishing, 2009
- **A. DOTZLER ; M. RIEMENSBERGER ; W. UTSCHICK ; G. DIETL.** Interference robustness for cellular MIMO networks. *2012 IEEE 13th International Workshop on Signal Processing Advances in Wireless Communications (SPAWC,* June 2012, 229-233
- **A. DOTZLER ; G. DIETL ; W. UTSCHICK.** Unitary precoding for MIMO interference networks. *Proc. IEEE Global Communications Conference (GLOBECOM 2012,* December 2012, 3874-3879
- **A. DOTZLER ; W. UTSCHICK ; G. DIETL.** Fractional reuse partitioning for MIMO networks. *2010 IEEE Global Telecommunications Conference (GLOBECOM 2010,* December 2010, 1-5
- **J. ELLENBECK ; O. MUSHTAQ ; F. SHEIKH ; S. Q. SHAHRUKH.** Calibrating an efficient C++ implementation of the ITU-R M.2135 channel model for use in system-level simulations. *Proc. International Workshop on Propagation and Channel Modeling for Next-Generation Wireless Networks,* March 2011
- Guidelines for evaluation of radio interface technologies for IMT-Advanced. *ITU Radiocommunication Sector, Rep. ITU-R M.2135-1,* December 2009
- System-level simulations with the IMT-Advanced channel model. **J. ELLENBECK.** LTEAdvanced and Next Generation Wireless Networks: Channel Modelling and Propagation. John Wiley and Sons, 2012
- Evolved Universal Terrestrial Radio Access (E-UTRA); Further advancements for EUTRA physical layer aspects. *3rd Generation Partnership Project (3GPP,* March 2010